# EUROPEAN PATENT SPECIFICATION

(11) **EP 2 946 055 B1**
(45) Date of publication and mention of the grant of the patent: **03.04.2019**
(21) Application number: 13872114.7
(22) Date of filing: 11.12.2013
(51) Int. Cl.: E05D 7/00, B60J 5/02, E05D 3/02, E05D 7/10, E05D 7/12, E05D 5/06

(54) **ADJUSTABLE HINGE**
REGULIERBARES SCHARNIER
CHARNIÈRE RÉGLABLE

(30) Priority: 16.01.2013 SE 1350053
(43) Date of publication of application: 25.11.2015
(73) Proprietor: Scania CV AB, 151 87 Södertälje (SE)
(72) Inventor: THYRÉN, Sebastian, SE-117 39 Stockholm (SE); FAGERSTRÖM, Kjell, 153 32 Järna (SE); BOUCHOUIKA, Nadim, 141 45 Huddinge (SE)
(74) Representative: Scania CV AB
(86) International application number: PCT/SE2013/051485
(87) International publication number: WO 2014/112921

(56) References cited:
- EP-A2- 0 976 906
- WO-A2-2004/020247
- US-A- 3 879 766
- US-A- 4 584 739
- US-A- 4 584 739
- US-A- 5 074 609
- US-A- 5 967 586
- US-A1- 2008 209 677

## Description

### TECHNICAL FIELD OF THE INVENTION

The present invention concerns hinges for movable/pivotable hanging of a component. The invention concerns in particular a hinge that enables simple adjustment of the position of the component in relation to surrounding parts. The invention is intended in particular for use in commercial and/or heavy vehicles such as goods vehicles, buses etc where the hinge can be used to hang the front hatch of the vehicle or for other doors or hatches in the vehicle. Because this type of hanging is often realized using hinges that can be concealed, the invention has the object of enabling adjustment of such hatches and doors in their closed position. The invention can naturally be used with other types of vehicles or in other applications where lateral adjustment of components to a correct position can pose a problem. The invention also concerns a vehicle in which a hinge according to the foregoing is used.

### BACKGROUND OF THE ART

Movable and openable components such as hatches and doors are used in all vehicles. Pivotable hinges are used to enable mobility around a shaft. The hatches and doors in heavy and/or commercial vehicles can be of significant size and weight. Handling these components during assembly and adjustment is consequently a problem, and the use of unwieldy lifting devices if often necessary. Because deviations from a desired nominal position and shape (tolerances) unfortunately always occur during serial production, the fastening elements for hatches and doors must be adjustable. The movable component needs to be adjusted laterally and sometimes vertically, e.g. because the gap width around the component in relation to surrounding body parts can vary, in order to achieve good function and esthetic symmetry for the mounting of the component, and parallelity for the gap.

It is consequently now common to use concealed hinges and fastenings to hang hatches and doors, i.e. the hinge is covered by nearby body parts. The actual adjustment must then normally occur in that the installer opens the hatch or door in order to enable access to the hinge and its fastening points and bolted joints. The hatch or door itself commonly prevents access to fastening elements and bolted joints in its closed position.

One fundamental requirement is that the fastening device be easily adjustable. Because the adjustment of the movable/pivotable component currently occurs in its open position, it is difficult or impossible to simultaneously and immediately check the function gap or gap width between the component and surrounding body parts. This is solved in practice in that the installer makes a preliminary adjustment of the movable component, whereupon it is closed and the gap width is checked. This step is repeated a plurality of times by the installer until the hatch or door has been adjusted to a desired position. This process is time-consuming, and makes the manufacturing process longer and more expensive. This method also requires that the usually heavy component must be opened and closed repeatedly, and the installer must maneuver, lift and displace the hatch/door laterally during the adjustment process. Lifting tools are used during assembly to meet applicable ergonomic requirements. Such a tool must be designed so that it enables precise movements, so that a correct mounting position for the component can ultimately be achieved.

The problem is thus to design a type of hinge with fastening points that can be concealed during the use of the vehicle, but which still make it possible to adjust the position of the component easily when the component is in its closed position. This would create cost advantages and ergonomic advantages in connection with assembly.

The prior art contains a number of different solutions for hinges for hanging vehicle hatches and vehicle doors.

For example, patent US8256825 describes a hinge for hanging a rear hatch on a car. The parts and fastening points of the hinge are arranged in recessions in the vehicle body and covered by a panel after installation, and by the rear hatch itself when it is in its closed position. The object of the design is to conceal the hinge and still create a hinge with a high load-bearing capacity. The patent does not describe a hinge or adjustability in accordance with the invention, with the hatch closed.

Patent US4584739 describes a hinge for hanging a component of a vehicle, disclosing the features of the preamble of claim 1.

Another variant of a hinge for hanging, e.g. a rear hatch is described in patent US2007/0024091**.** The design consists of a module with a plurality of pre-assembled parts, in which two hinges are included. This design enables time savings during production, in that a plurality of installation steps are eliminated on the assembly line. The patent does not describe a hinge or adjustability according to the invention, with the hatch closed.

Patent US6047934 describes a tool that can be used for the final installation of, for example, an engine hood when it is in its closed position. The tool is plucked from the vehicle after the installation. The hinge itself is of a known design. The patent does not describe a hinge or adjustability in accordance with the invention, with the hatch closed.

The prior art thus describes no hinge of the type described herein. A hinge intended for a movable or pivotable vehicle component, and with which the position of the component can be adjusted with the component in its closed position in the manner exhibited by the present invention has not been described previously.

The need thus exists for a new and improved solution that makes it possible to easily adjust the position of the movable component laterally and with the component in its closed position, and without using special lifting tools. It is also desirable that the hinge itself be simple in its design and cost-effective to fabricate. It is at the same time desirable that the hinge be small and compact and occupy as little space as possible, so that it can be disposed and used in tight spaces.

### SUMMARY OF THE INVENTION

One object of the invention is to solve the aforementioned problem and provide a hinge that facilitates and expedites the adjustment of the position of a component in relation to surrounding body parts.

A further object of the invention is that the hinge must be adjustable in its closed position.

A further object of the invention is that the hinge must relieve the weight of the component during the adjustment process.

A further object of the invention is that the hinge must be simple in its design and consist of as few parts as possible, and thus be cost-effective to fabricate.

A further object of the invention is that the hinge must be small and compact, so that it can easily be disposed and used in tight spaces.

A further object of the invention is that the hinge and its fastenings must be concealed after the final assembly of the vehicle, and during use of the vehicle.

These and additional objects and advantages are realized according to the invention by means of a hinge that exhibits the features described in the characterizing part of claim 1.

The invention thus generally concerns a device, a hinge, that enables movable/pivotable hanging of a preferably heavy component such as a hatch or door, and that is primarily used in commercial and/or heavy vehicles such as, for example, goods vehicles, buses etc, and wherein the hinge is typically used to hang the front hatch of the vehicle. The invention concerns in particular a hinge that is concealed when the vehicle is finally assembled and used, and has concealed fastenings, and that also enables simple adjustment of the position of the component during its installation in the vehicle. The invention is intended in particular to simplify the adjustment of the component in its closed function position, as in that position it is easier to determine whether the component is correctly installed in relation to surrounding body parts.

The invention can naturally also be used in other types of vehicles or in other applications where the adjustment of a component to a desired/optimal position can pose a problem or be overly time-consuming.

The invention also concerns a vehicle in which a hinge according to the foregoing is used.

The invention is achieved by designing the hinge with at least two parts, a first fixed and a second movable part, wherein the fixed part is, for example, mounted in the body of the cab and the movable part is mounted in, for example, a front hatch. The first part comprises a holder part and the second part comprises a transverse element that fits into the holder part. The transverse element comprises fastening holes for fixed mounting to the first part. The fastening holes are shaped oblong in order to enable lateral displacement of the second part. Designing the first part of the hinge as a holder forming a support makes it possible for the second movable part of the hinge to be able to be hanged on the first part in such a way that the movable part rests displaceably in the support but without bolted joints or the need to be fixedly mounted. This enables the component/hatch to be capable of being laterally displaced/adjusted easily and manually before the actual final assembly and bolting of the parts to one another occurs. The entire weight of the component is thus borne by the first fixedly mounted part of the hinge before the bolted joints are introduced and final adjustment and final assembly occur. An advantageous and simple lateral adjustability of the movable component, the hatch, in relation to the fixed part, the vehicle body, is thereby achieved.

The design according to the invention eliminates the disadvantages associated with the prior art and provides a more appropriate, functional and, most importantly, easily adjusted hinge.

For example, the hinge according to the invention eliminates the need for simultaneously and manually having to handle/maneuver the heavy movable component or the lifting tool during the adjustment of the position of the hatch in relation to the body.

Through its simple design, the solution according to the invention thus results in a hinge that ensures the desired functions and that can simultaneously bear the weight of the movable component so that unergonomic work steps are eliminated, but which still results in the expediting of the final installation.

The fact that the hinge and its fastenings are concealed in the closed position of the component but visible and accessible during the adjustment process is attributable to the design of the hinge, so that it can have room to be installed between the movable component and the body. The hinge can ultimately be covered by installing, for example, a panel or cover after the final installation of the component. The panel or cover can be made of metal or plastic, and can be intended to sit in place during the use of the vehicle.

Additional features and advantages of the invention will be presented below in the following and more detailed description of the invention, and in the accompanying drawings and other claims.

### BRIEF DESCRIPTION OF THE DRAWING

The invention is described in greater detail below in several preferred exemplary embodiments and with reference to the accompanying drawing figures.
**Figure 1** shows a side view of a vehicle cab and the way in which its upper front hatch opens (in the direction of the arrow).
**Figure 2** shows a front view of the vehicle cab, wherein the size of its front hatch is clearly evident.
**Figure 3** shows an oblique front view, without obscuring body parts or front hatch, of a hinge according to the invention mounted on the firewall of the cab.
**Figure 4** shows an oblique lateral perspective view of an uninstalled hinge according to the invention in a "closed" position.
**Figure 5** shows an oblique lateral perspective view of an uninstalled hinge according to the invention, but in an "open" position.
**Figure 6** shows the two main parts of the hinge according to the invention separated from one another.
**Figures 7a****-b** show a direct lateral view of the two parts of the hinge according to the invention.
**Figure 7c** shows a direct side view of the assembled hinge in a closed position.
**Figure 8** shows an oblique front view of the way in which the front hatch is mounted on and in front of the hinge (parts of the front hatch have been removed for the sake of clarity).
**Figure 9** shows the same view as Figure 8, but with a cover plate or panel installed that conceals the hinge in its final installed position.
**Figure 10** shows an alternative embodiment of a hinge according to the invention with a partly different design.

### DESCRIPTION OF PREFERRED EMBODIMENTS

The invention consists of a hinge that enables a simple positional adjustment in, primarily, the lateral direction, i.e. in the axial direction of the hinge, when it is mounted on or behind a movable/pivotable component, such as a front hatch of a vehicle. The hinge can be adjusted with the front hatch closed, and consists according to the invention of essentially two parts, wherein the one fixed part is intended to be mounted on a fixed body part, the vehicle, and the second movable part is intended to be mounted on the movable/pivotable component.

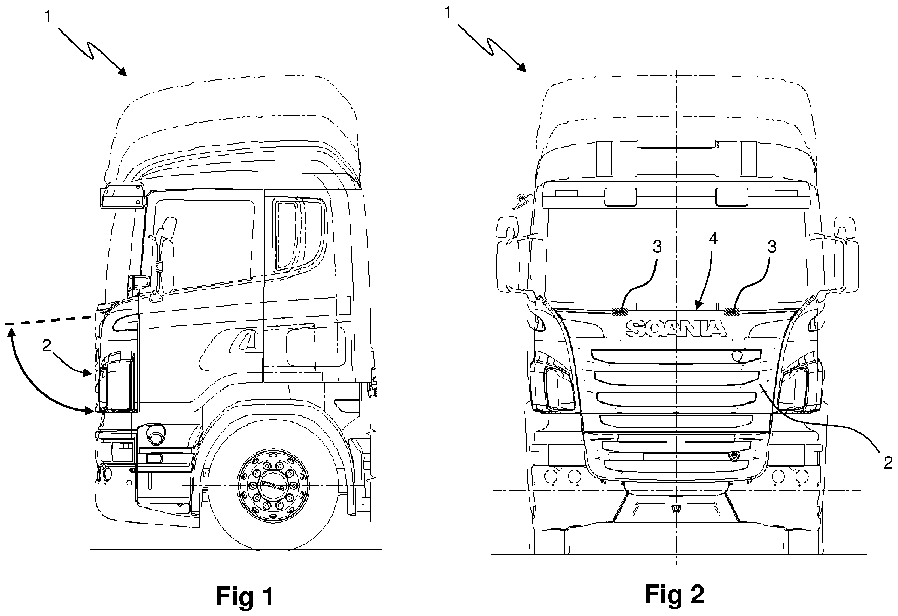

**Figure 1** shows a side view of a typical vehicle cab 1 and the way in which its forward upper front hatch 2 can be opened forward/upward as viewed in the direction of vehicle travel, which is indicated by an arrow in the figure. The hatch 2 is relatively large and thus heavy, and a lifting tool is commonly used during installation. Following installation, the difficulty lies in adjusting the position of the hatch 2 on the front of the vehicle so that the gap between the hatch and surrounding body parts is uniformly wide and esthetically pleasing, but also so that the functionality and openability of the hatch 2 are ensured.

**Figure 2** shows a front view of the vehicle cab 2, wherein its front hatch 2 is clearly visible. Hinges 3 according to the invention are disposed at the top of and essentially behind the upper front section 4 of the front hatch 2. Because of the size of the front hatch 2, its weight poses a problem during handling and installation, and when adjusting its position.

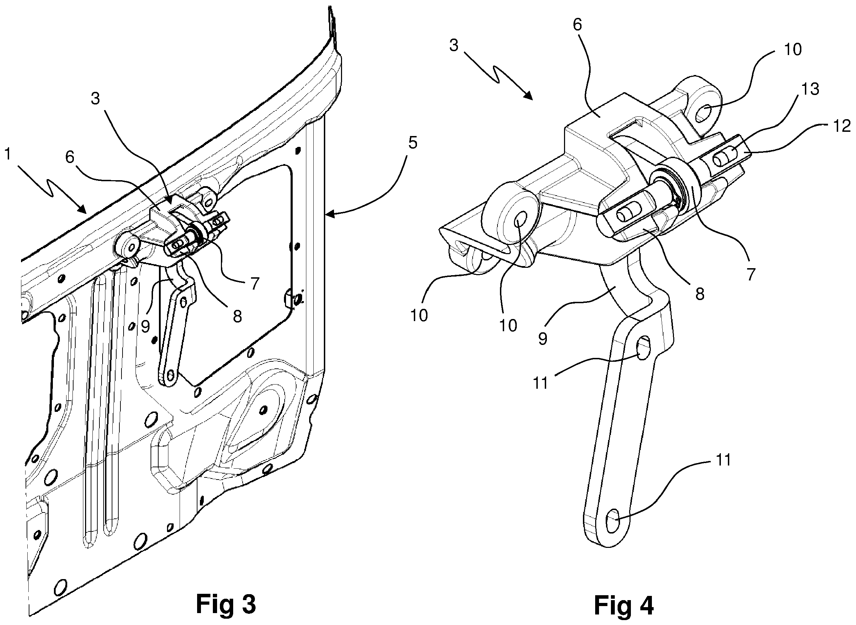

**Figure 3** shows an oblique frontal view, without obscuring body parts or a front hatch, of a hinge 3 according to the invention mounted on the so-called firewall 4 of the cab 1. The hinge 3 consists essentially of two parts, a first fixedly mounted part 6 and a second movable/pivotable part 7, wherein the second movable/pivotable part 7 is suspended in a holder part 8 arranged in the first fixedly mounted part 6 of the hinge 3. The movable/pivotable part 7 is preferably designed with a gooseneck-shaped link 9 to enable a large opening angle for the front hatch 3 (not shown) without the movable part 7 of the hinge 3 striking against or colliding with surrounding body parts such as covers or other body parts when the hinge 3 is fully opened.

**Figure 4** shows a more detailed oblique lateral perspective of an uninstalled hinge 3 according to the invention. The hinge 3 is shown here is a conceived "closed" position, i.e. the second part 7 of the hinge 3 with its link 9 is oriented vertically downward. A fastening hole 10 is arranged in the fixed part 6 of the hinge 3 for mounting to the vehicle, and additional fastening holes 11 are arranged in the link 9 of the movable part 7 for mounting to the movable component, i.e. the front hatch 2(not shown).

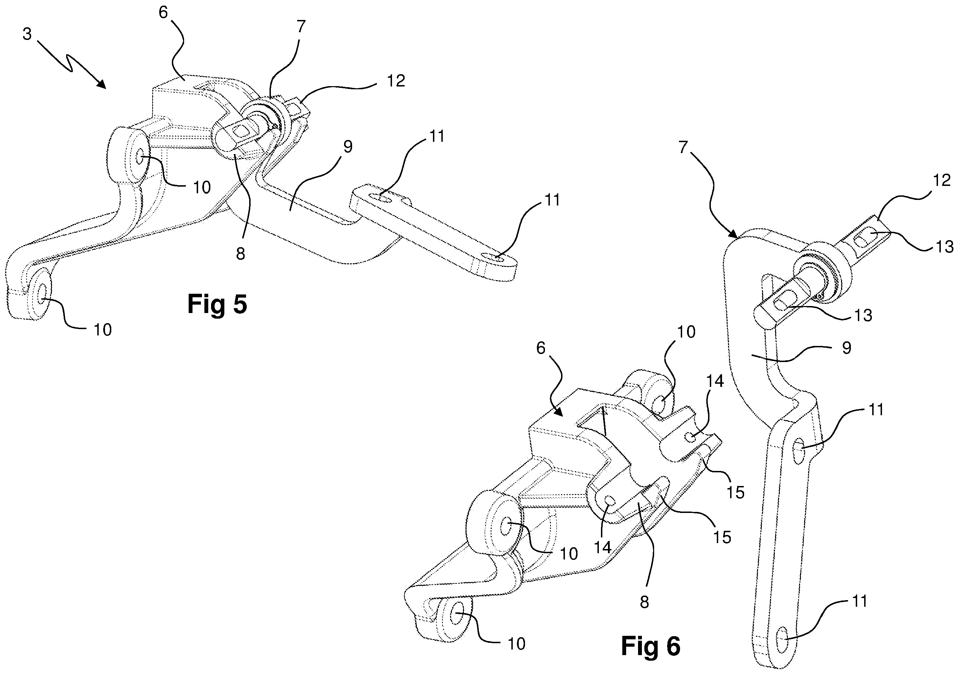

**Figure 5** shows an oblique lateral perspective view of the hinge 3 according to the invention shown in Figure 4, but here it is in a conceived "open" position, i.e. the second movable part 7 extends essentially straight out from the first part 6 in an essentially horizontal direction. A transverse element 12, here in the form of a shaft, is arranged in the movable part 7 of the hinge 3 and rests in the holder part 8, which is realized as a groove in the fixed part 6 of the hinge 3. The holder part 8 is open at the top and the transverse element 12 is pivotable and axially displaceable in the holder part 8.

**Figure 6** shows the two main parts 6, 7 of the hinge 3 according to the invention separated from one another, wherein the transverse element 12 and the holder part 8 are clearly visible. The holder part 8 is designed in such a way that the movable part 7 of the hinge 3 is kept in its position when the transverse element 12 is placed in, suspended in, the holder part 8. This is ensured because the weight of the front hatch 2 pushes the transverse element 12 vertically downward in the holder part 8. The transverse element 12 is equipped with mounting holes 13 through which bolted joints (not shown) can be inserted. Threaded fastening holes 14 are preferably arranged in the bottom of the holder part 8, which facilitate the fastening of both parts 6, 7 of the hinge to one another. The throughgoing holes 13 in the transverse element 12 are shaped oval or oblong in order to enable lateral adjustment, in the axial direction, of parts 6, 7 of the hinge in relation to one another when the bolted joints are inserted.

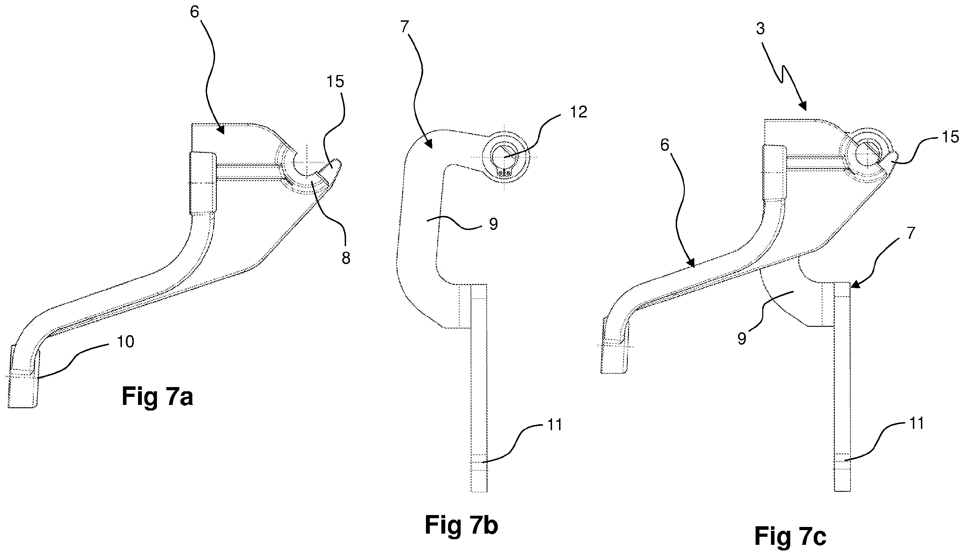

**Figure 7a** shows a direct side view of the fixed part 6 of the hinge 3 according to the invention. The recess/groove of the holder part 8 is essentially U-shaped, with its opening oriented obliquely upward and forward, viewed in the mounted position of the hinge 3. A lip 15 is arranged in connection to the groove of the holder part 8 and facilitates the guidance of the movable part 7 of the hinge 3 during installation.

**Figure 7b** shows a direct front view of the movable part 7 of the hinge 3 according to the invention. The gooseneck-shaped link 9 is clearly visible here. The transverse element 12 is essentially circular in cross-section in order to enable at least a degree of pivoting or rotation in the holder part 8, the groove.

**Figure 7c** shows a direct side view of the assembled hinge 3 in a conceived closed position. The hinge forms an integrated unit in this way.

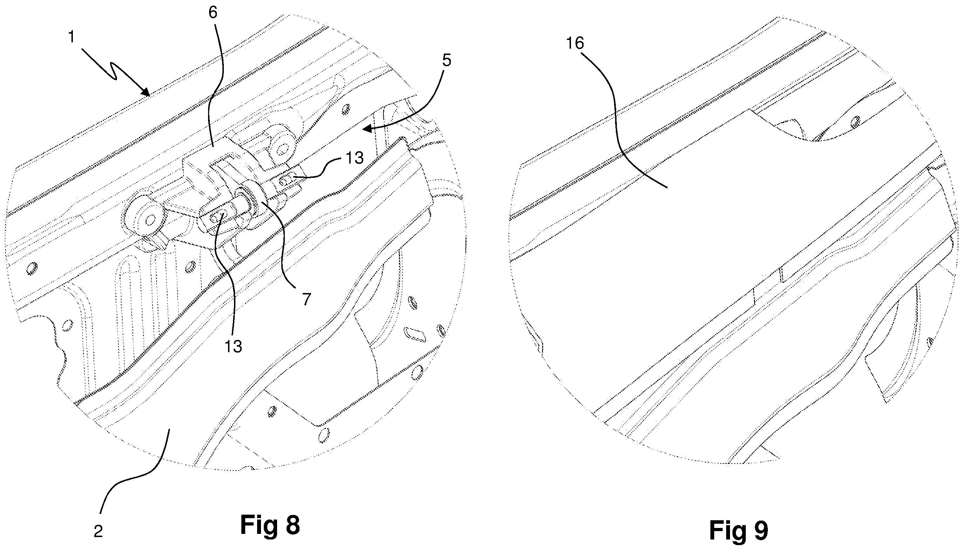

**Figure 8** shows an oblique front view of the way in which a front hatch 2 can be mounted on and in front of the hinge 3. Parts of the front hatch 2 have been removed here for the sake of clarity. As the figure shows, the fastening holes 13 in the transverse element 12 of the hinge 3 are oriented obliquely forward and upward to enable easy access and facilitate adjustment and final installation of the bolted joints (not shown) of the hinge 3.

**Figure 9** shows the same view as Figure 8, but here a cover plate 16 or panel element has been installed that conceals the hinge 3 in the final installed position of the front hatch 2. In connection with any future removal of the front hatch 2, the cover plate 16 will first be removed so that the bolted joints of the hinge 3 are again exposed.

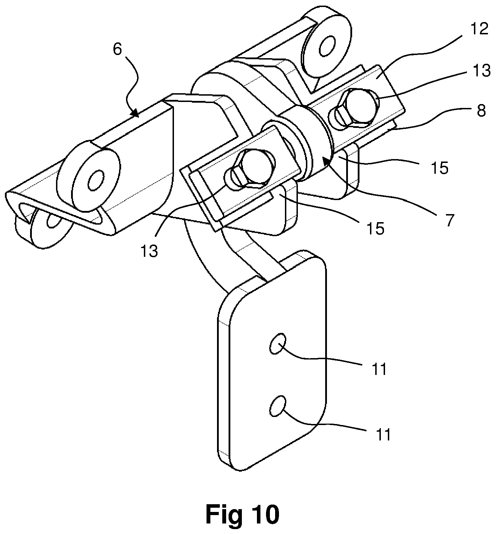

**Figure 10** shows an alternatively designed hinge 3 with a partly different design. In this embodiment, the transverse element 12 is realized as two external flat bars equipped with oblong mounting holes 13. The transverse element 12 can be suspended in the holder part 8 arranged in the first part 6 of the hinge 3 by means of lips 15 arranged on the fixed part 6 of the hinge, which enable a lateral displacement of the movable part 7 of the hinge.

The foregoing description is intended primarily to facilitate an understanding of the invention. The invention is naturally not limited to the foregoing embodiments, but rather other variants of the invention are also possible and conceivable within the framework of the inventive idea and the protective scope of the subsequent claims.

## Claims

1. A hinge (3), preferably intended to be used in vehicles such as goods vehicles, buses etc., for hanging a pivotable component (2) on a vehicle body, the hinge (3) comprising at least a first part (6) for fixed mounting in the vehicle and a second part (7) for mounting in the pivotable component (2), wherein the second part (7)is axially displaceable relative to the first part (6), wherein the first part (6) of the hinge (3) is equipped with a holder part arranged so as to enable removable suspension of the second pivotable part (7) of the hinge (3), (8), the second part (7) of the hinge (3) is equipped with a transverse element (12) that fits into the holder part (8) of the first part (6), wherein the transverse element (12) is designed as a rotatable shaft, and wherein the holder part (8) is arranged with a recess in the form of a groove that is essentially U-shaped in cross-section, **characterized in that** the transverse element (12) in the second part (7) of the hinge is equipped with fastening holes (13) for fixed mounting to the first part (6) of the hinge (3), and that the fastening holes (13) of the transverse element (12) are shaped oblong in order to enable lateral displacement of the second part (7) of the hinge (3), with bolted joints inserted such that adjustment of the pivotable component (2) in the axial direction of the hinge (3) is enabled when the pivotable component (2) is in its closed function position.

2. A hinge (3) according to claim 1, **characterized in that** the holder part (8) is equipped with one or a plurality of lips (15) intended to keep the second part (7) of the hinge (3) in contact with the first part (6).

3. A hinge (3) according to any of the preceding claims, **characterized in that** the hinge (3) is arranged behind the pivotable component(2), preferably behind its upper edge (4).

4. A hinge (3) according to claim 1, **characterized in that** the fastening holes (13) of the transverse element (12) are, in the mounted position, preferably oriented obliquely upward and forward, as viewed in the direction of vehicle travel, in order to facilitate access and installation of bolted joints.

5. A hinge (3) according to any of the preceding claims, **characterized in that** the hinge (3) is arranged so as to be covered by a cover plate (16), in its final mounted position.

6. A vehicle containing a hinge (3) according to any of claims 1-5.

## Patentansprüche

1. Gelenk (3), das vorzugsweise dazu vorgesehen ist, in Fahrzeugen wie Transportfahrzeugen, Bussen etc. verwendet zu werden, um eine schwenkbare Komponente (2) an einer Fahrzeugkarosserie aufzuhängen, wobei das Gelenk (3) umfasst
wenigstens ein erstes Teil (6) zum festen Montieren an dem Fahrzeug und ein zweites Teil (7) zum Befestigen an der schwenkbaren Komponente (2), wobei das zweite Teil (7) relativ zu dem ersten Teil (6) axial verschieblich ist, wobei
das erste Teil (6) des Gelenks (3) mit einem Halteteil (8) ausgebildet ist, das dazu eingerichtet ist, eine lösbare Aufhängung des zweiten schwenkbaren Teils (7) des Gelenks (3) zu ermöglichen, wobei das zweite Teil (7) des Gelenks (3) mit einem querliegenden Element (12) ausgebildet ist, das in das Halteteil (8) des ersten Teils (6) passt, wobei das querliegende Element (12) als ein drehbarer Schaft gestaltet ist, und wobei das Halteteil (8) mit einer Aussparung in Form einer Nut ausgebildet ist, die im wesentlichen U-förmig in deren Querschnitt ist,
**dadurch gekennzeichnet, dass**
das querliegende Element (12) in dem zweiten Teil (7) des Gelenks mit Befestigungsöffnungen (13) zum festen Montieren an dem ersten Teil (6) des Gelenks (3) ausgebildet ist, und dass die Befestigungsöffnungen (13) des querliegenden Elements (12) länglich ausgebildet sind, um seitliche Verschiebung des zweiten Teils (7) des Gelenks (3) zu ermöglichen, wobei Bolzenverbindungen eingefügt sind, sodass eine Anpassung der schwenkbaren Komponente (2) in der axialen Richtung des Gelenks (3) möglich ist, wenn die schwenkbare Komponente (2) in ihrer geschlossenen Funktionsposition ist.

2. Gelenk (3) nach Anspruch 1, **dadurch gekennzeichnet, dass** das Halteteil (8) mit einer oder einer Vielzahl von Lippen (15) ausgestattet ist, die dazu vorgesehen ist, das zweite Teil (7) des Gelenks (3) mit dem ersten Teil (6) in Kontakt zu halten.

3. Gelenk (3) nach einem der vorhergehenden Ansprüche, **dadurch gekennzeichnet, dass** das Gelenk (3) hinter der schwenkbaren Komponente (2), vorzugsweise hinter dessen oberen Rand (4), angeordnet ist.

4. Gelenk (3) nach Anspruch 1, **dadurch gekennzeichnet, dass** die Befestigungsöffnungen (13) des querliegenden Elements (12), in der montierten Position, vorzugsweise quer nach oben und nach vorne orientiert sind, bei Betrachtung in Fahrzeugfahrtrichtung, um Zugang und Installation von geschraubten Verbindungen zu ermöglichen.

5. Gelenk (3) nach einem der vorhergehenden Ansprüche, **dadurch gekennzeichnet, dass** das Gelenk (3) dazu eingerichtet ist, durch eine Abdeckplatte (16) in dessen final montierten Position abgedeckt zu sein.

6. Fahrzeug umfassend ein Gelenk (3) nach einem der Ansprüche 1-5.

## Revendications

1. Charnière (3), de préférence destinée à être utilisée dans des véhicules tels que des véhicules utilitaires, des bus, etc., pour la suspension d'un composant pivotant (2) à une carrosserie de véhicule, la charnière (3) comprenant au moins une première partie (6) permettant un montage fixe dans le véhicule et une seconde partie (7) permettant un montage dans le composant pivotant (2), dans laquelle la seconde partie (7) est déplaçable axialement par rapport à la première partie, dans laquelle la première partie (6) de la charnière (3) est équipée d'une partie support agencée de manière à permettre la suspension amovible de la seconde partie pivotante (7) de la charnière (3), (8), la seconde partie (7) de la charnière (3) est équipée d'un élément transversal (12) qui s'insère dans la partie support (8) de la première partie (6), dans laquelle l'élément transversal (12) est conçu comme un arbre rotatif et dans laquelle la partie support (8) comporte un évidement en forme de rainure qui est essentiellement en forme d'U en coupe transversale,
**caractérisé en ce que** l'élément transversal (12) dans la seconde partie (7) de la charnière est équipé d'orifices de fixation (13) pour un montage fixe sur la première partie (6) de la charnière (3), et **en ce que** les trous de fixation (13) de l'élément transversal (12) ont une forme oblongue pour permettre le déplacement latéral de la seconde partie (7) de la charnière (3), avec des joints boulonnés insérés de manière à ce que le réglage du composant pivotant (2) dans le sens axial de la charnière (3) soit activé lorsque le composant pivotant (2) est dans sa position de fonctionnement fermée.

2. Charnière (3) selon la revendication 1, **caractérisée en ce que** la partie support (8) est équipée d'une ou de plusieurs lèvres (15) destinées à maintenir la seconde partie (7) de la charnière (3) en contact avec la première partie (6) .

3. Charnière (3) selon l'une quelconque des revendications précédentes, **caractérisée en ce que** la charnière (3) est disposée derrière le composant pivotant (2), de préférence derrière son bord supérieur (4).

4. Charnière (3) selon la revendication 1, **caractérisée en ce que** les trous de fixation (13) de l'élément transversal (12) sont, de préférence, orientés obliquement vers le haut et vers l'avant, tel qu'observé dans le sens de la marche du véhicule, afin de faciliter l'accès et l'installation de joints boulonnés.

5. Charnière (3) selon l'une quelconque des revendications précédentes, **caractérisée en ce que** la charnière (3) est agencée de manière à être recouverte par une plaque de couverture (16), dans sa position finale de montage.

6. Véhicule contenant une charnière (3) selon l'une quelconque des revendications 1 à 5.
